# EUROPÄISCHE PATENTSCHRIFT

(11) **EP 3 024 610 B1**
(45) Veröffentlichungstag und Bekanntmachung des Hinweises auf die Patenterteilung: **21.11.2018**
(21) Anmeldenummer: 14744520.9
(22) Anmeldetag: 24.07.2014
(51) Int. Cl.: B22C 9/10, B22C 9/12, B22C 1/22, B29C 64/153, B33Y 80/00, B33Y 10/00

(54) **SALZKERNE UND GENERATIVE FERTIGUNGSVERFAHREN ZUR HERSTELLUNG VON SALZKERNEN**
SALT CORE AND ADDITIVE MANUFACTURING METHOD FOR PRODUCING SALT CORES
NOYAUX DE SEL ET PROCÉDÉS DE FABRICATION ADDITIVE POUR RÉALISER DES NOYAUX DE SEL

(30) Priorität: 24.07.2013 DE 102013214466
(43) Veröffentlichungstag der Anmeldung: 01.06.2016
(73) Patentinhaber: Emil Müller GmbH, 91452 Wilhermsdorf (DE)
(72) Erfinder: HARTIG, Thorsten, 90617 Puschendorf (DE)
(74) Vertreter: Scherzberg, Andreas Hans
(86) Internationale Anmeldenummer: PCT/EP2014/065933
(87) Internationale Veröffentlichungsnummer: WO 2015/014711

(56) Entgegenhaltungen:
- EP-A1- 0 968 776
- DE-A1-102007 023 152
- DE-B3-102005 019 699
- US-A1- 2008 135 204
- KAMITANI ET AL: "A method of fabricating evaporative models by selective laser melting", THE REVIEW OF LASER ENGINEERING,, Bd. 29, Nr. 8, 1. Januar 2001 (2001-01-01) , Seiten 522-526, XP002730581,
- MARUTANI Y ET AL: "Manufacturing sacrificial patterns for casting by salt powder lamination", RAPID PROTOTYPING JOURNAL,, Bd. 10, Nr. 5, 1. Januar 2004 (2004-01-01) , Seiten 281-287, XP002730655, DOI: 10.1108/13552540410562313

## Beschreibung

Die Erfindung betrifft Salzkerne als Hohlraumplatzhalter in Gussteilen und/oder Kunststoffformteilen sowie generative Fertigungsverfahren zur Herstellung solcher Salzkerne. Insbesondere betrifft die Erfindung Salzkerne, die mittels selektiven Lasersinterns hergestellt werden können.

Das bevorzugte Einsatzgebiet für solche Salzkerne sind sämtliche Gießverfahren für Leichtmetalle und Buntmetalle, Herstellverfahren für Kunststoffe und/oder kohlefaser- und glasfaserverstärkte Bauteile.

Bei vielen, durch Gießen, hergestellten Produkten, ist es erforderlich Hohlräume im Inneren, oder Hinterschneidungen im Außenbereich zu erzeugen. Bei drucklosen Verfahren, wie beispielsweise dem Schwerkraftgießen, wird ein Kern aus verfestigtem Sand oder Salz innerhalb der Form positioniert und mit Metallschmelze umgossen, wobei die Gießform gefüllt und der Kern mit Schmelze umschlossen wird.

Der Begriff Gussteil soll im Rahmen dieser Erfindung nicht nur metallische Bauteile, sondern generell alle Bauteile umfassen, die mithilfe von Kernen gegossen, spritzgegossen oder sonstig hergestellt werden. Insbesondere sollen auch Kunststoffformteile, die beispielsweise mittels Spritzgießens hergestellt werden, umfasst sein.

Trockengepresste Salzkerne sind im Gießereiweisen seit Jahrzehnten im Einsatz. Dieses bekannte Fertigungsverfahren kommt für Produkte mit einfachen Geometrien zum Einsatz.

Ein weiteres Herstellungsverfahren für Salzkerne ist das Kernschießen. Durch Kernschießen können Salzkerne mit wesentlich komplexeren Geometrien prozesssicher hergestellt werden. Beide Verfahren, also das Trockenpressen und das Kernschießen, weisen den Nachteil auf, dass immer ein Urformwerkzeug benötigt wird. Die Herstellung von Urformwerkzeugen ist aufwendig, zeitintensiv und kostspielig. Weiterhin unterliegen Urformwerkzeuge einem Fertigungsverschleiß.

Außerdem ist eine Produktion von einteiligen Formen und Kernen mit hinterschnittigen Konturen formtechnisch nicht möglich. Die Herstellung gepresster Kerne mit komplexen Geometrien ist nur durch nachgelagerte Prozessschritte möglich.

Aus DE 10 2005 019 699 B3 ist ein Verfahren zur generativen Herstellung eines Salzkerns bekannt, wobei ein Gemisch aus NaCl und MgSO₄ mittels einer 3D-DruckVorrichtung durch Bestrahlung mit Wasser zu einem Gusskern aufgebaut wird. Aufgabe der Erfindung ist die Vermeidung der genannten Nachteile, insbesondere die Bereitstellung von Salzkernen mit komplexen Geometrien sowie die Bereitstellung eines Verfahrens zur Herstellung solcher Kerne.
Diese Aufgabe wird mit Salzkernen gemäß Anspruch 1 und einem Verfahren nach Anspruch 6 gelöst. Vorteilhafte Weiterbildungen des Gegenstands der Erfindung sind den Unteransprüchen zu entnehmen.
Demgemäß ist ein erfindungsgemäßer Salzkern zur Herstellung von Gussteilen, dadurch gekennzeichnet, dass der Salzkern einen schichtweisen Aufbau aufweist, wobei der schichtweise Aufbau aus einzeln aufgebrachten und verfestigten Schichten von Formstoff besteht.
Nach einer besonders bevorzugten Ausführungsform der Erfindung sind die Salzkerne löslich, insbesondere wasserlöslich, so dass sie rückstandsfrei aus einem Gussteil entfernt werden können.
Ein erfindungsgemäßes Verfahren zur Herstellung eines Salzkerns ist dadurch gekennzeichnet, dass der Salzkern mit einem generativen Fertigungsverfahren hergestellt wird. Dabei wird ein Formstoff durch selektives Lasersintern verfestigt.
Ein erfindungsgemäßes Verfahren zur Herstellung von Salzkernen unterscheidet sich von aus dem Stand der Technik bekannten Verfahren dadurch, dass die Salzkerne ohne die Verwendung von Urformwerkzeugen hergestellt werden können und ein mit Binder umhülltes Salz durch elektromagnetische Strahlung selektiv ausgehärtet wird.

Die erfindungsgemäßen Kerne werden aus einem Formstoff, umfassend zumindest ein mit Binder umhülltes Salz, sowie ggf. Hilfsstoffe, wie Füllstoffe, Additive, Benetzungsmittel und Katalysatoren, hergestellt.

Gemäß der Erfindung ist der Salzkern hohl gestaltet, wobei das Innere des Salzkerns mit unverfestigtem Formstoff gefüllt ist. Besonders bevorzugt besteht der Salzkern aus einer selektiv lasergesinterten Randschale, währenddessen der von der verfestigten Randschale umschlossene, innere Formstoffanteil nicht lasergesintert ist.

Der durch Lasersintern hergestellte, Salzkern ist, zum Schließen oberflächennaher, offener Poren, mit einer wasserlöslichen Schlichte überzogen. Es wurde gefunden, dass es möglich ist, eine Vielzahl von Funktionsteilen, die zur Herstellung von beispielsweise Getrieben, Antriebselementen, Pumpen, Kanälen und Rohrsystemen dienen, nicht erst nach Herstellung eines Hohlformkörpers in diesen einzubringen und zu montieren, sondern sie in einen wasserlöslichen Salzkern einzubringen, der sodann in einem Gießverfahren mit Metall oder Kunststoff umgossen wird. Nachfolgend wird der wasserlösliche Salzkern ausgespült und die Funktionsteile liegen bereits in der gewünschten Position und Funktion im Hohlformkörper vor.
Demnach umfasst ein solcher Salzkern mindestens ein Bauteil, insbesondere ausgewählt aus Zahnrädern, Getriebeteilen, Achselementen oder Antriebselementen in formschlüssiger Verbindung. Das mindestens eine Bauteil ist vom Salzkern weitgehend umschlossen, d.h. ganz oder teilweise, so dass beim Umguss kein Hintergießen mit Schmelze und keine Flitterbildung auftritt. In der Regel ragen aus dem Salzkern nur die Achsen oder Achslager hervor oder liegen an dessen Oberfläche an.

Das Verfahren umfasst das selektive Sintern von mit Bindemitteln umhülltem Salz mittels Laser. In diesem Verfahren sind die Vorteile des Kernschießens und Trockenpressens miteinander verknüpft:
- Eine hohe Komplexität der Form / des Kerns ist durch den schichtenweisen Aufbau realisierbar; ebenso ist es möglich hohle Strukturen zu generieren.
- Für das selektive Lasersintern der Salze können kostengünstige und biologisch / ökologisch im Wesentlichen unbedenkliche Salze verwendet werden.
- Das Sintern der Partikel erfolgt durch eine computergesteuerte, selektive Erhitzung einer dünnen Salzschicht mittels Laser. Dabei wird das Bindemittel ausgehärtet und "versintert" die einzelnen Salzpartikel miteinander.
- Für jede neu aufgetragene Formstoffschicht muss der selektive Sintervorgang wiederholt werden.
- Durch den schichtenweisen Aufbau und das lokale Sintern entsteht kein Verzug am Bauteil. Dadurch, dass nur kleine Bereiche aufgeheizt und gesintert werden, kommt es nicht zu einer Volumenkontraktion beim Erstarren.
- Die Porosität/Gasdurchlässigkeit der erzeugten Kerne/Formen kann gezielt eingestellt werden.
- Leichte und rückstandsfreie Entfernung der Kerne, da die Kerne ausschließlich aus wasserlöslichen Komponenten bestehen können.
- Hohe Flexibilität und Geschwindigkeit bei Kleinserien und Prototypen
- Keine Werkzeugkosten
Als Formstoff wird kristallines Salz verwendet, welches mit einem warm- oder heißhärtenden Binder umhüllt oder vermischt ist. Beim selektiven Sintern wird der Binder durch elektromagnetische Strahlung ausgehärtet, so dass die Salzpartikel miteinander "versintern". Der Sinterprozess ist dabei aber nicht mit einem keramischen oder metallischen Sinterprozess zu verwechseln, bei dem die Körner des Matrix-Materials versintern. Hier wird lediglich ein Bindemittel ausgehärtet, wofür jedoch ebenfalls der Begriff "Sintern" verwendet wird.

Das kristalline Salz kann eine unimodale, aber auch bi- oder multimodale Korngrößenverteilung aufweisen. Eine bi- oder multimodale Korngrößenverteilung kann vorteilhaft in Hinblick auf eine besonders dichte Packung der Kristalle sein. Die in den erfindungsgemäßen Salzkernen vorhandene Porosität kann damit variiert werden. Die erfindungsgemäßen Salzkerne weisen nach dem selektiven Lasersintern eine Restporosität von weniger als 30%, bevorzugt von weniger als 5% und insbesondere bevorzugt von weniger als 2% bezogen auf des Gesamtvolumen des Salzkerns auf.

Gemäß einer bevorzugten Ausführungsform der Erfindung können die Korngrößen des kristallinen Salzes in einem Bereich von 0,01 mm bis 2 mm liegen, wobei die Korngrößen des kristallinen Salzes insbesondere bevorzugt in einem Bereich von 0,01 bis 0,29 mm, 0,3 bis 1,3 mm und/oder von 1,31 bis 2,0 mm liegen. Die ersten beiden Fraktionen können als eher feinkörniges Salz und die letzte Fraktion kann als eher grobkörniges Salz in multimodal zusammengesetzten Mischungen Verwendung finden.

Wesentliche Auswahlkriterien für die zu verwendenden Salze sind deren Giftigkeit und die Löslichkeit, insbesondere in Wasser.

Als Salze können bevorzugt Chloride, Sulfate, Phosphate oder Nitrate der Alkali -, Erdalkali- oder der Nebengruppenelemente oder Mischungen dieser Salze, insbesondere Natriumchlorid, Kaliumchlorid, Magnesiumchlorid und/oder Kaliumsulfat, Magnesiumsulfat, Ammoniumsulfat, Natriumsulfat umfasst oder enthalten sein.

Ein erfindungsgemäßes Verfahren zur Herstellung solcher Salzkerne zeichnet sich dadurch aus, dass die Salzformen und Salzkerne schichtweise aufgebaut werden.

Weiterhin zeichnet sich das erfindungsgemäße Verfahren dadurch aus, dass der Formstoff ein pulverförmiges, körniges oder granuliertes Salz oder eine Mischung von Salzen mit runden, unregelmäßig geformten oder eckigen, splittrigen Kristallen ist. Das Salz ist mit einem Binder versetzt und besonders bevorzugt mit diesem Binder umhüllt.

Bevorzugt ist der Binder ein Harz aus der Gruppe der Phenol-, der Phenol-Harnstoff-Formaldehyd-, der stickstofffreien oder stickstoffarmen Phenol-Formaldehyd-, der furfurylalkoholhaltigen Phenol-, Furfurylalkohol-Harnstoff-Formaldehyd-, der Furan-, der phenol-modifizierten Furan- oder der Amino-Harze, der Novolake oder der Resole, welches entweder flüssig oder fest eingesetzt werden kann.

Der mittels des generativen Fertigungsverfahrens erzeugte Salzkern kann in einem Ofen nachgehärtet werden. Je nachdem, welches Bindemittel mit welchem Laser behandelt wird, kann es zweckmäßig sein, einen weiteren Härtungsschritt in einem Ofen nachzuschalten. Hierbei können gemäß einer weiteren Ausführungsform der Erfindung auch leichter flüchtige Bestandteile des Binders ausgetrieben werden. Dies hat den Vorteil, dass diese Bestandteile nicht erst bei der Verwendung des Kerns z.B. beim Leichtmetall-Guss austreten und dann zu unerwünschter Blasenbildung im Gussteil führen.

Ein erfindungsgemäßes Verfahren zum Herstellen von Salzkernen durch selektives Lasersintern kann beispielsweise die folgenden Schritte umfassen:
- Erzeugen eines Datenmodells eines herzustellenden Salzkerns
- Aufbereiten einer Formstoffmischung aus Salz und Binder
- Aufbringen einer dünnen Formstoffschicht auf eine absenkbare Trägerplatte
- Computergesteuertes, selektives Aushärten der Formstoffschicht in dem Datenmodell entsprechenden Bereichen durch elektromagnetische Strahlung, insbesondere durch Laser-Bestrahlung
- Absenken der Trägerplatte
- Erneutes Auftragen einer Formstoffschicht
- Wiederholung der vorangegangenen Prozessschritte, bis das erzeugte Bauteil dem Datenmodell entspricht
- Optional: Nachhärten des Kerns/der Form in einem Ofen.

## Patentansprüche

1. Salzkern als Hohlraumplatzhalter zur Herstellung von Gussteilen, **dadurch gekennzeichnet, dass** der Salzkern einen schichtweisen Aufbau aufweist, wobei der schichtweise Aufbau aus einzeln aufgebrachten und verfestigten Schichten von Formstoff besteht, wobei der fertige, generativ hergestellte Salzkern mit einer wasserlöslichen Schlichte überzogen ist und wobei der Salzkern hohl ist, wobei das Innere des Salzkerns mit unverfestigtem Formstoff gefüllt ist.

2. Salzkern nach Anspruch 1, **dadurch gekennzeichnet, dass** der Salzkern wasserlöslich ist.

3. Salzkern- nach einem der vorstehenden Ansprüche, **dadurch gekennzeichnet, dass** die Salzkerne eine Restporosität von weniger als 30%, bevorzugt von weniger als 5% und insbesondere bevorzugt von weniger als 2% bezogen auf das Gesamtvolumen des Salzkerns aufweisen.

4. Salzkern nach einem der vorstehenden Ansprüche, **dadurch gekennzeichnet, dass** der fertige, generativ hergestellte Salzkern mit einer wasserlöslichen Salzschmelze infiltriert worden ist.

5. Salzkern nach einem der vorstehenden Ansprüche, **dadurch gekennzeichnet, dass** der Salzkern mindestens ein Bauteil, insbesondere ausgewählt aus Zahnrädern, Getriebeteilen, Achselementen oder Antriebselementen in formschlüssiger Verbindung enthält, wobei das mindestens eine Bauteil vom Salzkern ganz oder teilweise umschlossen ist.

6. Verfahren zur Herstellung eines Salzkerns, **dadurch gekennzeichnet, dass** der Salzkern mit einem generativen Fertigungsverfahren, mittels selektiven Lasersinters, hergestellt wird, wobei als Formstoff kristallines Salz verwendet wird, welches mit einem warm- oder heiß-härtenden Binder umhüllt oder vermischt ist, wobei eine Randschale des Salzkerns selektiv lasergesintert wird, wobei der innere Formstoffanteil nicht gesintert wird..

7. Verfahren nach Anspruch 6, **dadurch gekennzeichnet, dass** das kristalline Salz in einer unimodalen, bimodalen oder einer multimodalen Korngrößenverteilung enthalten ist.

8. Verfahren nach einem der Ansprüche 6 oder 7, **dadurch gekennzeichnet, dass** die Korngrößen des kristallinen Salzes in einem Bereich von 0,01 mm bis 2 mm liegen, wobei die Korngrößen des kristallinen Salzes insbesondere in einem Bereich von 0,01 bis 0,29 mm, 0,3 bis 1,3 mm und/oder von 1,31 bis 2,0 mm liegen.

9. Verfahren nach einem der Ansprüche 6 bis 8, **dadurch gekennzeichnet, dass** der Binder ein Harz aus der Gruppe der Phenol-, der Phenol-Harnstoff-Formaldehyd-, der stickstofffreien oder stickstoffarmen Phenol-Formaldehyd-, der furfurylalkoholhaltigen Phenol-, Furfurylalkohol-Harnstoff-Formaldehyd-, der Furan-, der phenol-modifizierten Furan- oder der Amino-Harze, der Novolake oder der Resole enthält, welches entweder flüssig oder fest eingesetzt werden kann.

10. Verfahren nach einem der Ansprüche 6 bis 9, **dadurch gekennzeichnet, dass** der mittels des generativen Fertigungsverfahrens erzeugte Salzkern in einem Ofen nachgehärtet wird.

11. Verfahren nach einem der Ansprüche 6 bis 10, **dadurch gekennzeichnet, dass** das Verfahren zum Herstellen von Salzkernen durch selektives Lasersintern die folgenden Schritte umfasst:
- Erzeugen eines Datenmodells eines herzustellenden Salzkerns
- Aufbereiten einer Formstoffmischung aus Salz und Binder
- Aufbringen einer dünnen Formstoffschicht auf eine absenkbare Trägerplatte
- Computergesteuertes, selektives Aushärten der Formstoffschicht in dem Datenmodell entsprechenden Bereichen durch elektromagnetische Strahlung, insbesondere durch Laser-Bestrahlung
- Absenken der Trägerplatte
- Erneutes Auftragen einer Formstoffschicht - Wiederholung der vorangegangenen Prozessschritte, bis das erzeugte Bauteil dem Datenmodell entspricht
- optional: Nachhärten des Kerns/der Form in einem Ofen.

## Claims

1. A salt core as a cavity place-holder for the production of cast portions, **characterised in that** the salt core has a layered structure, wherein the layered structure consists of individually applied and consolidated layers of moulding material, wherein the finished, generatively produced salt core is coated with a water-soluble facing, and wherein the salt core is hollow, with the interior of the salt core being filled with unconsolidated moulding material.

2. A salt core according to claim 1, **characterised in that** the salt core is water-soluble.

3. A salt core according to one of the preceding claims, **characterised in that** the salt cores have a residual porosity of less than 30%, preferably of less than 5%, and in particular preferably of less than 2% relative to the total volume of the salt core.

4. A salt core according to one of the preceding claims, **characterised in that** the finished, generatively produced salt core has been infiltrated with a water-soluble salt melt.

5. A salt core according to one of the preceding claims, **characterised in that** the salt core contains at least one component, in particular selected from toothed wheels, gear parts, axle elements or drive elements in a form-locking connection, wherein the at least one component is completely or partly surrounded by the salt core.

6. A method for producing a salt core, **characterised in that** the salt core is produced with a generative manufacturing method, by means of selective laser sintering, wherein crystalline salt is used as the moulding material that is encased by or mixed with a warm- or hot-curing binder, wherein a surface shell of the salt core is selectively laser-sintered, with the inner moulding-material portion not being sintered.

7. A method according to claim 6, **characterised in that** the crystalline salt is contained in a unimodal, bimodal or a multimodal grain-size distribution.

8. A method according to one of claims 6 or 7, **characterised in that** the grain sizes of the crystalline salt lie in a range of 0.01 mm to 2 mm, wherein the grain sizes of the crystalline salt lie in particular in a range of 0.01 to 0.29 mm, 0.3 to 1.3 mm and/or of 1.31 to 2.00 mm.

9. A method according to one of claims 6 to 8, **characterised in that** the binder contains a resin from the group of phenolic, phenol-urea-formaldehyde, nitrogen-free or low-nitrogen phenol-formaldehyde, furfuryl-alcohol-containing phenolic, furfuryl alcohol-urea-formaldehyde, furan, phenol-modified furan or amino resins, novolaks or resols that can be used either in a liquid or solid state.

10. A method according to one of claims 6 to 9, **characterised in that** the salt core created by means of the generative manufacturing method undergoes post-curing in a furnace.

11. A method according to one of claims 6 to 10, **characterised in that** the method for producing salt cores by means of selective laser-sintering comprises the following steps:
- creation of a data model of a salt core that is to be produced
- preparation of a moulding-material mixture of salt and binder
- application of a thin layer of moulding material to a lowerable carrier plate
- computer-controlled, selective curing of the layer of moulding material in regions corresponding to the data model by means of electromagnetic radiation, in particular by means of laserirradiation,
- lowering of the carrier plate
- renewed application of a layer of moulding material
- repetition of the preceding process steps until the component that is created corresponds to the data model
- optional: post-curing of the core/mould in a furnace.

## Revendications

1. Noyau de sel servant de réserve à vides dans la fabrication de pièces moulées en fonte, **caractérisé en ce que** le noyau de sel présente une structure en couches, laquelle structure en couches est constituée de couches de matériau à mouler déposées individuellement et consolidées, étant entendu que le noyau de sel fini, fabriqué de manière additive, est recouvert d'une couche soluble dans l'eau et que le noyau de sel est creux, l'intérieur du noyau de sel étant rempli de matériau à mouler non consolidé.

2. Noyau de sel conforme à la revendication 1, **caractérisé en ce que** le noyau de sel est soluble dans l'eau.

3. Noyau de sel conforme à l'une des revendications précédentes, **caractérisé en ce que** le noyau de sel présente une porosité résiduelle de moins de 30 %, de préférence de moins de 5 % et mieux encore de moins de 2 %, par rapport au volume total du noyau de sel.

4. Noyau de sel conforme à l'une des revendications précédentes, **caractérisé en ce que** le noyau de sel fini, fabriqué de manière additive, a été infiltré d'une masse fondue de sel soluble dans l'eau.

5. Noyau de sel conforme à l'une des revendications précédentes, **caractérisé en ce que** le noyau de sel contient au moins une pièce de structure, choisie en particulier parmi les roues dentées, organes de commande, éléments d'axe ou organes moteurs, en liaison mécanique, laquelle pièce de structure au nombre d'au moins une est totalement ou partiellement enfermée dans le noyau de sel.

6. Procédé de fabrication d'un noyau de sel, **caractérisé en ce que** le noyau de sel est fabriqué selon un procédé de fabrication additif, par frittage sélectif au laser, étant entendu qu'on utilise en tant que matériau à mouler du sel cristallisé qui est enrobé d'un liant durcissant à chaud ou à froid ou mélangé avec un tel liant, qu'on fritte sélectivement au laser une couche superficielle du noyau de sel et que la partie intérieure du matériau à mouler n'est pas frittée.

7. Procédé conforme à la revendication 6, **caractérisé en ce que** le sel cristallisé présente une distribution unimodale, bimodale ou multimodale des tailles de grains.

8. Procédé conforme à l'une des revendications 6 et 7, **caractérisé en ce que** les tailles des grains du sel cristallisé se situent dans un intervalle allant de 0,01 à 2 mm, étant entendu que les tailles des grains du sel cristallisé se situent en particulier dans un ou des intervalle(s) allant de 0,01 à 0,29 mm, de 0,3 à 1,3 mm et/ou de 1,31 à 2,0 mm.

9. Procédé conforme à l'une des revendications 6 à 8, **caractérisé en ce que** le liant contient une résine choisie dans l'ensemble formé par les suivantes : résines phénoliques, résines phénol-urée-formol, résines phénol-formol sans azote ou pauvres en azote, résines phénoliques contenant de l'alcool furfurylique, résines urée-formol-alcool furfu-rylique, résines furaniques, résines furaniques modifiées au phénol, résines aminoplastes, novolaques et résols, laquelle résine peut être utilisée à l'état liquide ou à l'état solide.

10. Procédé conforme à l'une des revendications 6 à 9, **caractérisé en ce que** le noyau de sel produit par le procédé de fabrication additif est post-durci dans un four.

11. Procédé conforme à l'une des revendications 6 à 10, **caractérisé en ce que** le procédé de fabrication de noyaux de sel par frittage sélectif au laser comporte les étapes suivantes :
- élaboration d'un modèle numérique d'un noyau de sel à fabriquer,
- préparation d'un matériau à mouler, mélange de sel et de liant,
- dépôt d'une mince couche de matériau à mouler sur une plaque-support qu'on peut déplacer vers le bas,
- durcissement sélectif, commandé par ordinateur, de la couche de matériau à mouler dans le domaine correspondant au modèle numérique, au moyen d'un rayonnement électromagnétique, en particulier par irradiation laser,
- déplacement de la plaque-support vers le bas,
- dépôt d'une nouvelle couche de matériau à mouler,
- répétition des étapes de procédé précédentes, jusqu'à ce que la pièce de structure produite corresponde au modèle numérique,
- et en option, post-durcissement du noyau/moule dans un four.
